# EUROPEAN PATENT APPLICATION

(11) **EP 3 608 294 A1**
(43) Date of publication of application: **12.02.2020**
(21) Application number: 18000668.6
(22) Date of filing: 10.08.2018
(51) Int. Cl.: C02F 1/00, C02F 101/32, C02F 1/44

(54) **WATER PURIFICATION APPARATUS**

(71) Applicant: Marsh Boyer, Stephen, Irthlingborough, Northamptonshire NN9 5PJ (GB)
(72) Inventor: Marsh Boyer, Stephen, Irthlingborough, Northamptonshire NN9 5PJ (GB)
(74) Representative: Franks & Co (South) Limited

(57) **Abstract**

A water purification apparatus (101) is disclosed. The apparatus (101) comprises an inlet (102), a receiving chamber (103), a primary treatment chamber (106), a secondary treatment chamber (110) and an outlet (125). The inlet (102) allows influx of a polluted aqueous liquid into the receiving chamber (103). The polluted aqueous liquid passes through a baffle (105) into the primary treatment chamber (106), where it is processed by a first filter (111), producing a primary filtered liquid. The primary filtered liquid then passes into the secondary treatment chamber (110) by way of a connective pipe (116). The primary filtered liquid then passes through a second filter (121) producing a final filtered liquid which is evacuated form the apparatus (101) by way of the outlet (125). The apparatus (101) obviates present issues in the ability for known water treatment units to process large and sudden surges of polluted aqueous liquid whilst maintaining a higher quality effluent.

## Description

### BACKGROUND OF THE INVENTION

### Field of the Invention

The present invention relates to the field of equipment for the purification of water. More particularly, it relates to the purification of water that has been contaminated with pollutants such as hydrocarbons, producing an effluent that is in conformity with Environment Agency (or equivalent body) standards.

### Description of the Related Art

Water run off from substantially urbanised areas often contains very high levels of hydrocarbon pollution. In this regard, where areas have been urbanised to the extent that the majority of the ground surface is substantially impermeable concrete or tarmac, there may be a significant build up over time of hydrocarbon deposits. These deposits may be directly from oil, petrol or diesel spills, or indirectly via air pollution deposits from combustion engines. When heavy rain occurs within these areas there is usually a large surge in water run off due to the impermeable surface of the ground and this run off is typically saturated with hydrocarbon pollutants. Accordingly, if the surface water run off is not processed to reduce the levels of the hydrocarbons contained within, there is a high risk of pollution to the surrounding area through eventual absorption of the polluted water.

At present, there are a number of surface water run off treatment apparatus known in the art. These apparatus are able to conform to current national Environment Agency standards (or equivalent body) for quality of the effluent after processing. However, effluent quality remains a concern and an area which is considered to require further improvement. Moreover, current apparatus known in the art have a somewhat limited ability to cope with significant surges in polluted water influx. A large influx of polluted water frequently occurs after extended periods of drought that are subsequently followed with a heavy downpour of rain, or in some instances, through consistently high levels of rain.

It has therefore been known for some time within the field that there is a need for a means by which polluted water run off may be treated beyond the levels currently demanded by appropriate national environment agencies. Moreover, there is a ubiquitous need for apparatus that can accommodate a sudden and drastic influx of such a polluted aqueous liquid without detrimentally affecting the quality of the effluent produced by said apparatus.

Accordingly, it is an object of the present invention to address and obviate the aforementioned issues exhibited by apparatus known in the art. In particular, it is an object to provide an apparatus for the treatment of hydrocarbon polluted surface run-off water to afford a high-quality effluent that goes beyond conformity with the levels currently expected by national environment agencies. It is furthermore an object of the present invention to provide such an apparatus that is capable of facilitating large surges in polluted water influx with minimal to no effect on the quality of the effluent produced.

### BRIEF SUMMARY OF THE INVENTION

According to a first aspect of the present invention, there is provided a water purification apparatus, a receiving chamber, having at least one inlet means), through which a polluted aqueous liquid may enter the receiving chamber; a primary treatment chamber, having first and second ends, operatively connected to the receiving chamber adjacent said first end, and provided with at least one first filter means through which aqueous liquid may leave the primary treatment chamber; a secondary treatment chamber, having first and second ends, provided with sub-chamber means adjacent said first end, said sub-chamber means being operatively connected to the primary treatment chamber so as to receive aqueous liquid by way of the or each first filter means; at least one second filter means, operatively connecting the sub-chamber means and a receiving volume of the secondary treatment chamber; and at least one outlet means through which aqueous liquid may exit from the secondary treatment chamber.

Preferably, the receiving chamber comprises first and second ends and is provided with grating means separating it from the primary treatment chamber, said grating means comprising a plurality of elongate apertures.

Most preferably, the grating means is situated adjacent the second end of the receiving chamber and extends from a bottom surface of said chamber to a top surface of said chamber.

Preferably, the primary treatment chamber comprises a partition situated adjacent its second end, said partition being impermeable, and extending substantially vertically in use.

Advantageously, the primary treatment chamber is in fluid communication with the sub-chamber means by way of connective pipe means, said pipe means comprising first and second ends, extending away from the or each first filter means and traversing the partition.

Most advantageously, the or each first filter means comprises an elongate and substantially cylindrical coalescer filter with first and second ends, said filter being provided with a semi permeable membrane adjacent its second end.

Preferably, the or each first filter means is releasably attached adjacent its second end to respective filter housing means, said filter housing means forming a passageway between said first filter means and the connective pipe means.

Preferably, the connective pipe means is releasably attached to the filter housing means by way of a pipe receiving aperture, said pipe means providing fluid communication from said first filter means through the partition into the sub-chamber means.

Advantageously, the second end of the connective pipe means is provided with valve closure means for manual regulation of the flow of aqueous liquid into the sub-chamber means.

Preferably, the sub-chamber means is situated adjacent a top edge of the partition and comprises at least one filter aperture, the or each aperture being adapted to receive the or each second filter means.

Preferably, the or each second filter means is releasably attached adjacent its first end to a periphery of the or each filter aperture.

Advantageously, the or each second filter means comprises an elongate microfibre filter.

Preferably, the apparatus further comprising at least one overflow return means for the return of excess aqueous liquid from the sub-chamber means to the receiving chamber (103), obviating overflow of said aqueous liquid out of said sub-chamber means (118).

Most preferably, the or each overflow return means comprises an elongate pipe having upstream and downstream ends, said downstream end being situated adjacent the second end of the connective pipe means and said upstream end being situated adjacent a top edge of the grating means within the receiving chamber.

According to a second aspect of the present invention, there is provided a waste suspension treatment process comprising the steps of: providing water purification apparatus (101) as claimed in any one of the preceding claims; receiving a polluted aqueous liquid; carrying out a first filtration of said polluted aqueous liquid, producing a primary filtered liquid; carrying out a second filtration of said primary filtered liquid, producing a final treated liquid; and ejecting said final treated liquid from the apparatus.

### BRIEF DESCRIPTION OF THE DRAWINGS

The invention will now be described by way of example only with reference to the accompanying drawings, which are purely schematic and not to scale, of which:
Figure 1a is a semi-transparent side elevation of a water purification apparatus;
Figure 1b is a cross-sectional plan view of the water purification apparatus shown in Figure 1, taken along line A-A;
Figure 2a is a semi-transparent side elevation of a first filter of the water purification apparatus shown in Figure 1;
Figure 2b is a cross-sectional plan view of the first filter of the water purification apparatus shown in Figure 1, taken along line B-B;
Figure 3a is a semi-transparent side elevation of a second filter of the water purification apparatus shown in Figure 1;
Figure 3b is a cross-sectional plan view of the second filter of the water purification apparatus shown in Figure 1, taken along line C-C;

### DETAILED DESCRIPTION OF EXAMPLE EMBODIMENTS

### Figure 1a

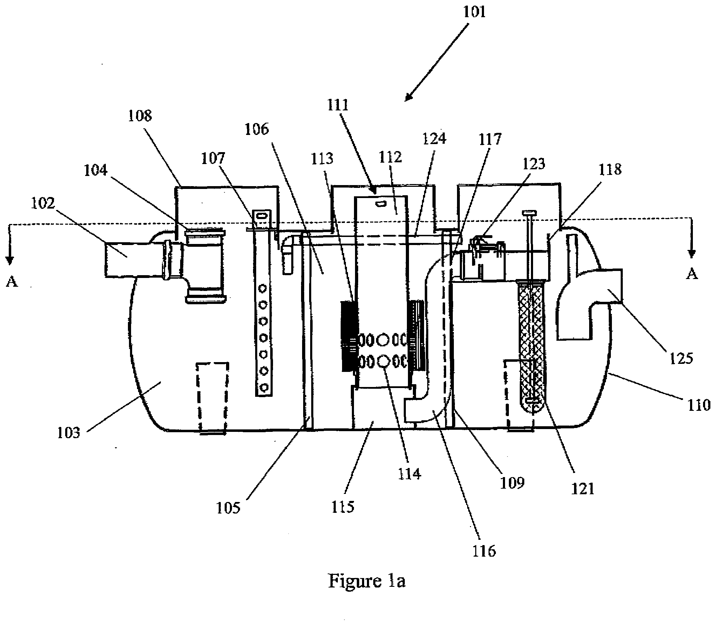

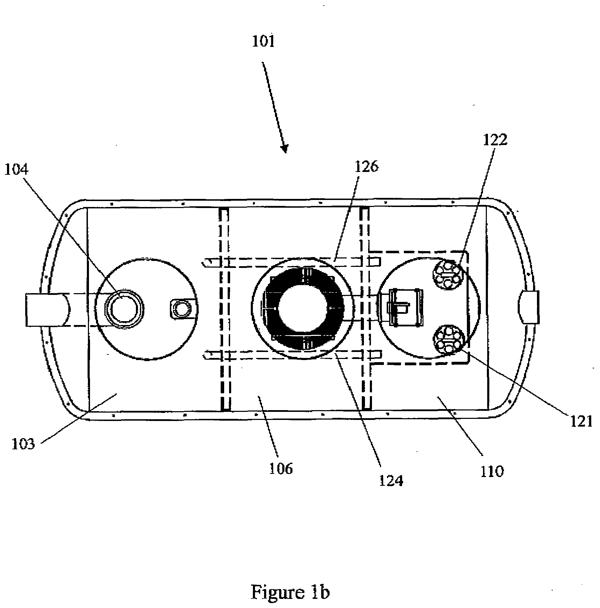

Referring now to the Figures, and to Figure 1 in particular, a water purification apparatus (indicated generally at 101), comprises at least one polluted aqueous liquid inlet 102 in fluid communication with a receiving chamber 103. The polluted aqueous liquid inlet 102 is a typical fluid inlet, such as a pipe, and facilitates the influx of a polluted aqueous liquid into the receiving chamber 103. The apparatus 101 shall typically be installed within the floor and shall form part of a storm-drain run off system. Accordingly, the polluted aqueous liquid inlet 102 is adaptable so as to fit to a typical commercial waste outlet, such as those found in storm drain run offs. Moreover, the polluted aqueous liquid inlet 102 is capable of being adapted to fit to a pipe outlet which is typically used to connect to storm run off apparatus known in the art. The polluted aqueous liquid inlet 102 further comprises an inlet access aperture 104. The inlet access aperture 104 provides a means for a user to remove any obstructions from the polluted aqueous liquid inlet 102 which may cause blockages and restrict flow. The inlet access aperture 104 further helps to obviate issues of pressure differences and helps to improve flow rate across the pipe leading to and in connection with the polluted aqueous liquid inlet 102.

The receiving chamber 103 comprises a baffle 105 whose apertures are dimensioned to allow throughflow of the polluted aqueous liquid, whilst separating macroscopic items from said liquid. Such macroscopic items include twigs, sticks, general rubbish or litter, rubber, floatables such as plastics and general debris. The baffle 105 defines elongate narrow apertures extending from adjacent a lower end of said baffle 105 to adjacent an upper end of said baffle 105. The baffle 105 is situated remotely from the polluted aqueous liquid inlet 102 of the receiving chamber 103 and defines a first boundary of the apparatus 101, situated between said receiving chamber 103 and a primary treatment chamber 106. The baffle 105 is therefore configured so as to afford effective filtration of macroscopic items from the polluted aqueous liquid as it passes out of the receiving chamber 103 into the primary treatment chamber 106. The baffle 105 is of a typical construction utilised within apparatus known in the art.

The receiving chamber 103 is further provided with a water level alarm system 107. The water level alarm system 107 is one of typical structure known in the art, capable of monitoring the water level within the receiving chamber 103 in real time and providing an audible warning once a pre-set limit is reached. The water level alarm system 107 may also be adapted to be in automatic connection with an influx valve (not represented in the current figures). The purpose of this coupling is for the modulation of influx of polluted aqueous liquid into the receiving chamber 103 as a result of the audible warning. Moreover, said influx may be restricted by adjustment of said influx valve upstream of the polluted aqueous liquid inlet 102, thus modulating influx of said polluted aqueous liquid into the receiving chamber 103. The water level alarm system 107 is releasably attached to an upper surface of the receiving chamber 103 and is readily accessible by a user by way of a first apparatus access aperture 108.

The primary treatment chamber 106 provides a space within the apparatus 101 for receiving the polluted aqueous liquid from the receiving chamber 103 by way of the baffle 105 for a first treatment phase. The primary treatment chamber 106 comprises first and second ends as well as top and bottom surfaces and is orientated so as to provide a vertically elongate space. The first end of the primary treatment chamber 106 is situated substantially adjacent the baffle 105 and the second end of the primary treatment chamber is situated remote from the baffle 105 and adjacent a partition 109. The partition 109 extends the entire depth and height of the primary treatment chamber 106, is substantially rigid, planar and impermeable. Said partition 109 is situated between the primary treatment chamber 106 and a secondary treatment chamber 110 and therefore defines a second boundary of the apparatus 101.

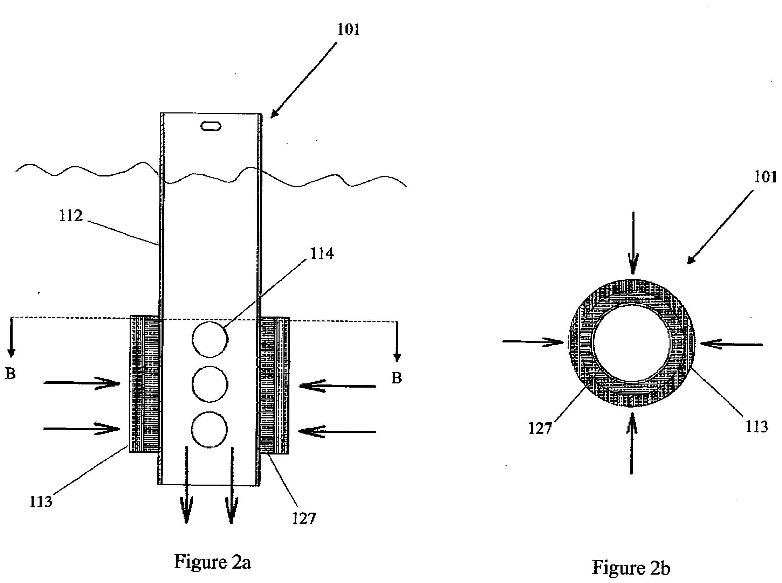

The primary treatment chamber 106 is provided with a first filter (indicated generally at 111). The first filter 111 is situated substantially centrally within the primary treatment chamber 106. The first filter 111 comprises an elongate impermeable casing 112 and a semi-permeable membrane 113. The elongate impermeable casing 112 comprises first and second ends. The first end of the elongate impermeable casing 112 is situated substantially adjacent the bottom surface of the primary treatment chamber 106. The second end of the elongate casing 112 is situated substantially adjacent the top surface of the primary treatment chamber 106. Accordingly, the impermeable casing 112 extends substantially vertically away from the bottom surface of the primary treatment chamber 106 to a point substantially adjacent the top surface of said chamber 106. The elongate impermeable casing 112 comprises a substantially cylindrical hollow pipe, typically constructed of plastics and provided with a membrane receiving region (numbered in Figures 2a and 2b). The membrane receiving region of the elongate casing 112 is adapted to be releasably attached to an inner circumference of the semi-permeable membrane 113 and is provided with a plurality of apertures 114. The semi-permeable membrane 113 is attached in a water-tight manner to the membrane receiving region, thus the polluted aqueous liquid may only traverse through said impermeable casing 112 by way of the apertures 114 situated behind the semi-permeable membrane 113.

The semi-permeable membrane 113 comprises a polyester based open-cell reticulated foam, with a density of 35-20 kg/m³. The first filter 111 comprises a coalescer filter, designed for removal of hydrocarbons from an aqueous liquid. Accordingly, when the polluted aqueous liquid passes through the filter 111 by way of the semi-permeable membrane 113 and subsequent apertures 114 a substantial volume of the hydrocarbon pollutant particles are removed from the liquid, affording a primary filtered liquid. Maintenance of the first filter 111 is required to maintain performance of the apparatus 101 and hence, the first filter 111 is removable from said apparatus 101 for maintenance or exchange. The first filter 111 also provides a means of removal of rubber particles from the polluted aqueous liquid.

The primary treatment chamber 106 is further provided with a first filter housing 115 and a traversing pipe 116. The first filter housing 115 substantially comprises a cylindrical pipe with first and second ends, a filter receiving aperture and a pipe receiving aperture. The first filter housing 115 is fixedly connected at its first end to the bottom surface of the primary treatment chamber 106 and is releasably attached at its second end to the first end of the impermeable casing 112 of the first filter 111. More particularly, the first filter 111 is releasably attached to the filter housing 115 by way of the filter receiving aperture in a water-tight manner. The filter housing 115 is then releasably attached to the traversing pipe 116 by way of the pipe receiving aperture. The releasable attachment between the filter housing 115 and the traversing pipe 116 is also water-tight.

The traversing pipe 116 comprises an elongate pipe with first and second ends which provides a means of fluid communication between an internal volume of the first filter 111 and the secondary treatment chamber 110. More particularly, the traversing pipe 116 is releasably attached at its first end to the pipe receiving aperture of the filter housing 115. The traversing pipe 116 then extends substantially outwardly and vertically away from the filter housing 115 to a point substantially adjacent both the upper surface of the primary treatment chamber 106 and the partition 109. The second end of the traversing pipe 116 is received by a partition aperture 117, is releasably engaged through said aperture 117 as an interference fit, in a water-tight manner and extends therethrough into the secondary treatment chamber 110.

Accordingly, the polluted aqueous liquid passes through the semi-permeable membrane 113 of the first filter 111, affording a primary filtered liquid, which in turn passes through the apertures 114 of the impermeable casing 112 and down into the filter housing 115. The primary filtered liquid is then forced through the filter housing 115 and through the traversing pipe 116 into the secondary treatment chamber 110 by way of the partition aperture 117 by sheer water pressure and throughflow.

The secondary treatment chamber 110 provides two areas within the apparatus 101; a first area for receiving the primary filtered liquid and implementing a second treatment phase, producing a final treated liquid; and a second area for receiving the final treated liquid and efflux of said liquid. The secondary treatment chamber 110 comprises first and second ends as well as top and bottom surfaces and is orientated so as to provide a vertically elongate space. The first end of the secondary treatment chamber 110 is situated substantially adjacent the partition 109 and the second end of the secondary treatment chamber 110 is situated remote from the partition 109.

The first area of the secondary treatment chamber is defined by an internal volume of a sub-chamber 118. The sub-chamber 118 is situated substantially adjacent the partition 109 and the upper surface of the secondary treatment chamber 110. The sub-chamber comprises a substantially rectangular basin with first and second elongate edges and first and second ends, adapted to temporarily receive and store a volume of the primary filtered liquid. The sub-chamber 118 is therefore generally a rectangular prism. The sub-chamber 118 is fixedly attached to the partition 109 about its first elongate edge within the secondary treatment chamber 110 and adjacent the top surface of said chamber. The sub-chamber 118 is therefore located within the secondary chamber 110 such that the second end of the traversing pipe 116 is situated substantially above or within the internal volume of the sub-chamber 118, thus facilitating flow of the primary filtered liquid into the sub-chamber 118.

The sub-chamber 118 comprises first 119 and second 120 filter apertures. The filter apertures 119, 120 are situated on a bottom surface of the sub-chamber 118 and remote from the second end of the traversing pipe 116. More particularly, the filter apertures 119, 120 are situated substantially adjacent the second elongate edge of the sub-chamber 118. The sub-chamber is provided with first 121 and second 122 secondary filters. The first 121 and second 122 secondary filters each comprise elongate microfibre bag filters with first and second ends and a generally cylindrical internal volume. The first 121 and second 122 secondary filters are received by the first 119 and second 120 filter apertures respectively and are releasably attached at their first ends to an inner periphery of said apertures 119, 120. The secondary filters 121, 122 are provided with a plastics neck ring at their first ends for releasable engagement with an appropriate housing within the filter apertures 118, 119, thus providing a water-tight seal at said point of attachment. The secondary filters 121, 122 are therefore releasably attached at their first end to apertures 119, 120 within the bottom surface of the sub-chamber 118 and extend substantially below the plane of the bottom surface of said sub-chamber into the second area of the secondary treatment chamber 110.

The micro fibre material of the secondary filters 121, 122 affords a means of removal of fine particulates and trace oils from the filtered liquid. Said microfibre material comprises polypropylene, is WRAS approved and BS6920 and FDA compliant. Accordingly, upon influx of the primary filtered liquid into the sub-chamber 118, said liquid passes through the filter apertures 119, 120 into the secondary filters 121, 122 and subsequently is filtered through said filters 121, 122 to afford a final filtered liquid which passes into the second area of the secondary treatment chamber 110. The final filtered liquid represents an effluent with typically <0.1mg/L oil. Therefore, through use of the first filter 111 (coalescer filter) and the secondary filters 121, 122 the apparatus 101 provides an effluent quality significantly surpassing the current Environment Agency EN858 standard (5mg/L).

The apparatus 101 comprises two means of prevention of overflow of primary filtered liquid out of the sub-chamber 118 into the second area of the secondary treatment chamber 110 without having passed through the secondary filters 121, 122. More particularly, the apparatus 101 has two means for modulating the water level within the sub-chamber 118. The traversing pipe 116 is provided with a regulating valve 123 adjacent its second end. The regulating valve 123 is a manually operable valve of typical design known in the art, allowing the user to temper the flow of the primary filtered liquid out of the traversing pipe 116 into the sub-chamber 118. This regulating valve 123 achieves this through narrowing the opening at the second end of the traversing pipe 116. The apparatus is further provided with at least one overflow return system 124. The overflow return system 124 substantially comprises an elongate pipe with first and second ends. The first end of the return system 124 is situated within an inner volume of the sub-chamber 118 and above the second end of the traversing pipe 116. More particularly, the second end of the return system 124 is received through a second aperture within the partition 109 and extends into the sub-chamber 118 above the second end of the traversing pipe 116 but below a top plane formed by an upper edge of the sub-chamber 118. The return system 124 then projects substantially longitudinally back across the apparatus 101 through the primary treatment chamber 106 and through an aperture within the baffle 105 to dispose its second end within the receiving chamber 103. The return system 124 therefore provides a means of returning the primary filtered liquid from the sub-chamber 118 to the receiving chamber 103 in the event that the water level within the sub-chamber 118 reaches a pre-set limit which must not be surpassed. This process also helps to dilute the polluted aqueous liquid within the receiving chamber 103.

The second area of the secondary treatment chamber 110 is defined as any volume of the secondary treatment chamber 110 that is below the plane of the bottom surface of the sub-chamber 118. This area of the secondary treatment chamber 110 therefore receives the final treated liquid from the secondary filters 121, 122 prior to efflux of said liquid from the apparatus 101. Accordingly, the secondary treatment chamber 110 further comprises an efflux aperture and treated liquid outlet 125. The treated liquid outlet 125 comprises an elongate efflux pipe, having first and second ends and of typical construction known in the art. The efflux aperture is situated within the second area of the secondary treatment chamber 110 and adjacent the second end of said chamber 110. More particularly, the efflux aperture is formed within an external wall of the secondary treatment chamber 110 at any point below the plane of bottom surface of the sub-chamber. The liquid outlet 125 is received through the efflux aperture, with the first end disposed within the second area of the secondary treatment chamber 110 and the second end extending outwardly away from the apparatus 101 along its longitudinal axis.

Accordingly, upon receiving the final treated liquid into the second area of the secondary treatment chamber 110, upon reaching a sufficient water level to facilitate forceful efflux, the final treated liquid passes through the liquid outlet 125 and out of the apparatus 101 to an appropriate water-course.

It shall be appreciated that whilst the present embodiment of the apparatus 101 comprises first 119 and second 120 filter apertures and first 121 and second 122 secondary filters, an alternative embodiment could merely comprise one of each. The, preference in the present apparatus 101 for two or more apertures and filters is for improved through flow and treatment capacity. Moreover, through utilising two apertures 119, 120 and two secondary filters 121, 122 the issue of overflow from the sub-chamber is substantially obviated.

### Figure 1b

Figure 1b is intended to assist in illustrating the general structure of the water purification apparatus 101. In particular, the general localisation of components of the apparatus 101, such as the sub chamber 118.

The water purification apparatus is represented generically at 101. As noted, the apparatus 101 comprises a receiving chamber 103, a primary treatment chamber 106 and a secondary treatment chamber 110. The present embodiment of the apparatus 101 comprises first 121 and second 122 secondary filters housed within the first 119 and second 120 filter apertures of the sub chamber 118. As noted, alternative embodiments may comprise a single secondary filter or indeed a plurality of said filter exceeding a minimum of two. The number of filter apertures in such an embodiment shall of course be multiplied in kind.

The apparatus 101 further comprises a second overflow return system 126. The second overflow system is substantially identical to the first 124, comprising an elongate pipe with first and second ends, and situated parallel to the first 124, extending from the sub chamber 118 to the receiving chamber 103. The first 124 and second 126 overflow return systems are spaced substantially equidistant from the sides of the sub chamber 118 and have their first ends disposed substantially identically within the sub chamber 118. The inclusion of the second overflow return system 126 is therefore to enhance the ability of the apparatus 101 to regulate throughflow and sudden surges in volume in the sub chamber 118.

### Figures 2a & 2b

Figures 2a and 2b are intended to assist in illustrating the structure of the fist filter 111. In particular, the components of the first filter 111 and their appropriate localisation are better represented in Figures 2a and 2b.

The first filter is indicated generally at 111 and comprises the elongate impermeable casing 112 and the semi-permeable membrane 113. The first end of the elongate impermeable casing 112 is situated substantially adjacent the bottom surface of the primary treatment chamber 106. The second end of the elongate casing 112 is situated substantially adjacent the top surface of the primary treatment chamber 106 and above the functional waterline of said chamber 106. The membrane receiving region 127 of the elongate casing 112 is adapted to be releasably attached to the inner circumference of the semi-permeable membrane 113 and is provided with a plurality of apertures 114. The semi-permeable membrane 113 is attached in a water-tight manner to the membrane receiving region 127 of the elongate casing 112, thus the polluted aqueous liquid may only traverse through said impermeable casing 112 by way of semi-permeable membrane 113 and the apertures 114 situated behind said membrane 113. Accordingly, the first filter 111 is adapted so as to only facilitate flow of the polluted aqueous liquid through the semi-permeable membrane 113, affording the primary filtered liquid.

It shall be appreciated that alternative embodiments of the apparatus 101 may further comprise a plurality of coalescer filters. The present embodiment comprises a single coalescer filter 111 for ease of construction and manufacture, as well as providing a sufficiently large surface area for intended rates of polluted aqueous liquid filtration. In particular, due to the cylindrical and elongate nature of the semi-permeable membrane 113, the polluted aqueous liquid may freely diffuse through the filter at any angle, not just merely a refined filter face or opening.

### Figures 3a & 3b

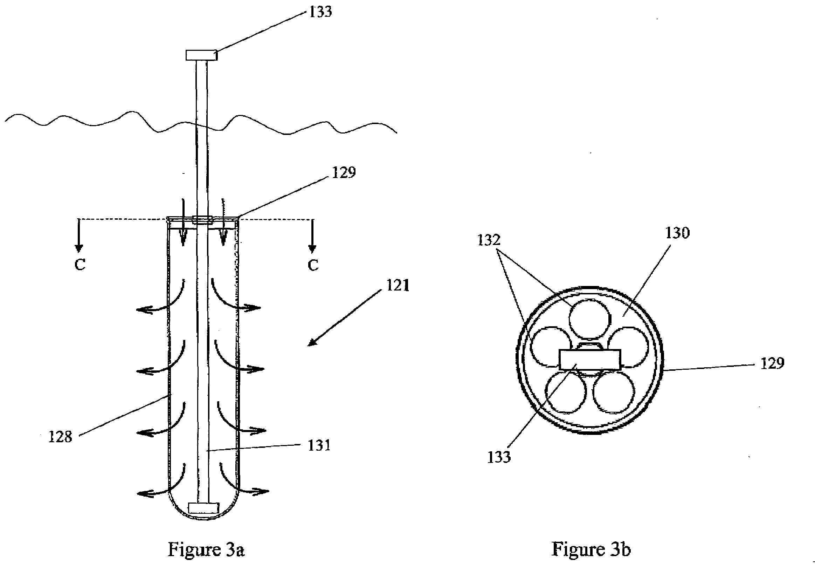

Figures 3a and 3b are intended to assist in illustrating the structure of the secondary filters 121, 122. In particular, the components of the secondary filters 121, 122 and their appropriate localisation are better represented in Figures 3a and 3b.

The first 121 and second 122 secondary filters are substantially identical, therefore, the general structure of the first filter is indicated generally at 121 and represented in Figure 3a (it shall be appreciated that the second secondary filter 122 also comprises the features of Figures 3a and 3b).

As previously noted, the secondary filter 121 comprises an elongate microfibre body 128 and a neck ring 129. The elongate microfibre body 128 has first and second ends and comprises polypropylene microfibre layers for removal of fine particulates and trace oils from the primary filtered liquid. Moreover, the layers of media (polypropylene) produce a high efficiency bag filter which is sewn together at its first end to the neck ring 129 to produce a water-tight seal at said point of engagement. The elongate microfibre body 128 therefore provides a generally cylindrical internal volume which affords a high surface area for optimised through-flow and filtration of the primary filtered liquid to produce the final filtered liquid.

The neck ring 129 substantially comprises rigid plastics and provides a means of releasably attaching the filter 121 to the sub-chamber 118 of the apparatus 101. More particularly, the secondary filters 121, 122 are received by the first 119 and second 120 filter apertures of the sub-chamber 118 respectively and are releasably attached at their first ends by way of their neck rings 129 to an inner periphery of said apertures 119, 120. The attachment of the neck rings 129 of the secondary filters 121, 122 to the internal periphery of the apertures 119, 120 provides a water-tight seal and ensures the primary filtered liquid must be processed by the secondary filters 121, 122 rather than leaking around them. The water-tight releasable attachment of the neck rings 129 to the inner periphery of the apertures 119, 120 is by way of a snap fitting. In alternative embodiments, this may also be achieved by washers or permanent fixings.

The filter 121 is further provided with a lid 130 and an elongate handle 131. The lid 130 substantially comprises plastics and is dimensioned to be received by the neck ring 129 of the filter 121. The lid 130 is provided with a plurality of apertures 132 to allow through-flow of the primary filtered liquid into the internal volume of the filter 121. The lid is fixedly attached substantially at its centre-point to the elongate handle 131. More particularly, the elongate handle 131 has first and second ends and comprises a grip 133. The elongate handle 131 is fixedly attached adjacent its second end to the lid 130 and the grip 133 is substantially situated adjacent the first end of said handle 131. The lid 130 and handle 131 therefore form a single unit (indicated generally at 134). The user may therefore remove the lid 130 from the filter 121 by grasping the grip 133 of the handle 131 and manually retracting the unit 134 without the need to get wet.

## Claims

1. A water purification apparatus (101) comprising:
a receiving chamber (103), having at least one inlet means (102), through which a polluted aqueous liquid may enter the receiving chamber;
a primary treatment chamber (106), having first and second ends, operatively connected to the receiving chamber (103) adjacent said first end, and provided with at least one first filter means (111) through which aqueous liquid may leave the primary treatment chamber;
a secondary treatment chamber (110), having first and second ends, provided with sub-chamber means (118) adjacent said first end, said sub-chamber means (118) being operatively connected to the primary treatment chamber (106) so as to receive aqueous liquid by way of the or each first filter means (111);
at least one second filter means (121), operatively connecting the sub-chamber means (118) and a receiving volume of the secondary treatment chamber (110); and
at least one outlet means (125) through which aqueous liquid may exit from the secondary treatment chamber (110).

2. The water purification apparatus of claim 1, wherein the receiving chamber (103) comprises first and second ends and is provided with grating means (105) separating it from the primary treatment chamber (106), said grating means (105) comprising a plurality of elongate apertures.

3. The water purification apparatus of claim 2, wherein the grating means (105) is situated adjacent the second end of the receiving chamber (103) and extends from a bottom surface of said chamber (103) to a top surface of said chamber (103).

4. The water purification apparatus of any one of claims 1 to 3, wherein the primary treatment chamber (106) comprises a partition (109) situated adjacent its second end, said partition (109) being impermeable, and extending substantially vertically in use.

5. The water purification apparatus of any one of claims 1 to 4, wherein the primary treatment chamber (106) is in fluid communication with the sub-chamber means (118) by way of connective pipe means (116), said pipe means (116) comprising first and second ends, extending away from the or each first filter means (111) and traversing the partition (109).

6. The water purification apparatus of any one of claims 1 to 5, wherein the or each first filter means (111) comprises an elongate and substantially cylindrical coalescer filter with first and second ends, said filter (111) being provided with a semi permeable membrane (113) adjacent its second end.

7. The water purification apparatus of claim 6, wherein the or each first filter means (111) is releasably attached adjacent its second end to respective filter housing means (115), said filter housing means (115) forming a passageway between said first filter means (111) and the connective pipe means (116).

8. The water purification apparatus of claim 7, wherein the connective pipe means (116) is releasably attached to the filter housing means (115) by way of a pipe receiving aperture, said pipe means (116) providing fluid communication from said first filter means (111) through the partition (109) into the sub-chamber means (118).

9. The water purification apparatus of claim 5, wherein the second end of the connective pipe means (116) is provided with valve closure means (123) for manual regulation of the flow of aqueous liquid into the sub-chamber means (118).

10. The water purification apparatus of claim 4, wherein the sub-chamber means (118) is situated adjacent a top edge of the partition (109) and comprises at least one filter aperture (119), the or each aperture (119) being adapted to receive the or each second filter means (121).

11. The water purification apparatus of claim 10, wherein the or each second filter means (121) is releasably attached adjacent its first end to a periphery of the or each filter aperture (119).

12. The water purification apparatus of any preceding claim, wherein the or each second filter means (121) comprises an elongate microfibre filter (128).

13. The water purification apparatus of claim any preceding claim, further comprising at least one overflow return means (124) for the return of excess aqueous liquid from the sub-chamber means (118) to the receiving chamber (103), obviating overflow of said aqueous liquid out of said sub-chamber means (118).

14. The water purification apparatus of claim 13, wherein the or each overflow return means (124) comprises an elongate pipe having upstream and downstream ends, said downstream end being situated adjacent the second end of the connective pipe means (116) and said upstream end being situated adjacent a top edge of the grating means (105) within the receiving chamber (103).

15. A water purification process comprising the steps of:
providing water purification apparatus (101) as claimed in any one of the preceding claims;
receiving a polluted aqueous liquid;
carrying out a first filtration of said polluted aqueous liquid, producing a primary filtered liquid;
carrying out a second filtration of said primary filtered liquid, producing a final treated liquid; and
ejecting said final treated liquid from the apparatus.
